# DEMANDE DE BREVET EUROPEEN

(11) **EP 1 892 041 A1**
(43) Date de publication de la demande: **27.02.2008**
(21) Numéro de dépôt: 07291333.8
(22) Date de dépôt: 11.12.2006
(51) Int. Cl.: B01J 29/40, C10G 11/05, B01J 35/10, B01J 37/28

(54) **Composition catalytique et procédé de craquage catalytique en lit fluidisé utilisant une telle composition**

(30) Priorité: 15.12.2005 FR 0512737
(62) Demande divisionnaire de: 06291902.2
(71) Demandeur: Total France, 92800 Puteaux (FR)
(72) Inventeur: Vermeiren, Walter, 3530 Houthalen-Helcheteren (BE); Decker, Sébastien, 76170 Triquerville (FR); Bories, Marc, 76280 Saint-Jouin (FR); Dath, Jean-Pierre, 7970 Beloeil-Hainault (BE)
(74) Mandataire: Roger, Walter

(57) **Abrégé**

L'invention concerne une composition catalytique pour le craquage catalytique en lit mouvant ou fluidisé (FCC), caractérisée en ce qu'elle est constituée:
- de 50% à 99,5% en poids, par rapport à (1) et (2), d'un composant catalytique amorphe (1) contenant un oxyde métallique amorphe mésoporeux et/ou macroporeux choisi parmi la silice, l'alumine et les aluminosilicates, et
- de 0,5% à 50% en poids, rapportés à la somme de (1) et (2), d' un composant catalytique cristallin (2) contenant un aluminosilicate cristallin microporeux,
et qu'elle est exempte de zéolithe Y.

L'invention concerne aussi un procédé de craquage catalytique en lit mouvant ou fluidisé circulant, d'au moins une charge hydrocarbonée ayant une température d'ébullition supérieure ou égale à 350°C, utilisant, en tant que seul catalyseur de craquage dans une zone réactionnelle de craquage, la composition catalytique précédente.

## Description

La présente invention concerne un produit hydrocarboné obtenu par un procédé de craquage catalytique en lit fluidisé utilisant une composition catalytique particulière, exempte de zéolithe Y.

Les procédés de craquage catalytique en lit fluidisé des coupes de distillation ayant une température d'ébullition supérieure ou égale à 350 °C sont bien connus de l'homme du métier. Le catalyseur utilisé est choisi de façon à convertir tout ou partie des coupes provenant des résidus de distillation atmosphérique en un maximum de produits commercialisables tels que notamment les GPL (en anglais LPG, pour *« liquefied petroleum gas »)* qui sont des hydrocarbures en C₃ et C₄, les essences ayant une température d'ébullition de 15 à 221°C et les gazoles de type LCO (pour « *light cycle oil* ») dont la température d'ébullition est de 221 à 350°C. Un autre produit de cette conversion est le résidu de craquage, ou « *slurry* » en anglais (appelé slurry par extension de langage dans la suite, comme cela est courant pour l'homme du métier), difficilement valorisable, dont la température d'ébullition est supérieure ou égale à 350°C.

Le choix du catalyseur va permettre d'influer sur la conversion, la répartition des produits (sélectivité) ainsi que sur la qualité de ces derniers.

Les catalyseurs connus utilisés actuellement en craquage catalytique en lit fluidisé (FCC) contiennent généralement une zéolithe de type Y plus ou moins échangées aux terres rares. Cette zéolithe ne pouvant pas être utilisée telle quelle du fait de sa petite taille, elle est systématiquement diluée (à l'aide d'un diluant) et agrégée (à l'aide d'un liant), puis combinée à une « matrice active » constituée d'oxydes métalliques amorphes et/ou cristallins, choisis parmi l'alumine, la silice et les aluminosilicates. On obtient ainsi un matériau catalytique présentant une bonne granulométrie, résistant à l'attrition et suffisamment actif et sélectif.

Il est également bien connu de l'homme du métier que l'incorporation, au catalyseur de FCC connu, de quelques « pour cent » en poids d'un deuxième catalyseur contenant une zéolithe MFI (de type ZSM-5 par exemple) permet d'augmenter encore la production de GPL et l'indice d'octane des essences de craquage catalytique. En raison de la faible proportion de ce deuxième catalyseur, qui ne dépasse généralement pas 15 % en poids de la composition catalytique totale, il est communément admis de le nommer « additif ». La teneur en zéolithe ZSM-5 de cet additif est généralement comprise entre 10 et 40 % en poids, le reste étant constitué de manière connue d'une matrice dite « active » composée soit d'alumine amorphe ou cristallisée sous différentes formes cristallines soit d'aluminosilicate, d'un liant et d'un diluant.

On peut citer à ce sujet le brevet US 6 566 293 au nom de Akzo Nobel NV, qui divulgue l'utilisation d'une zéolithe de type MFI activée grâce à un composé phosphoré dans une composition catalytique à base de zéolithe Y, dans le but d'augmenter le rendement en oléfines légères d'un procédé de craquage catalytique.

On peut en outre citer le brevet US 5 846 402 au nom de Indian Oil, qui divulgue un procédé de craquage catalytique à haut rendement en GPL et en oléfines légères utilisant une composition catalytique contenant, outre une zéolithe Y et un additif de craquage de fond, une zéolithe dont les pores présentent un diamètre de très petite taille (5 à 6 Å, avec 1 Å = 10⁻¹⁰ m).

Le petit diamètre des pores des zéolithes décrites dans ces documents implique que le diamètre cinétique des composés concernés par la réaction de craquage doit être inférieur à ces valeurs pour pouvoir pénétrer dans les pores de la zéolithe où sont situés les sites actifs. De même, le diamètre cinétique des produits issus de la réaction de craquage doit être inférieur au diamètre des pores pour que les produits de craquage puissent quitter l'intérieur de la zéolithe à l'issue de la réaction.

Dans les procédés de craquage catalytique des coupes lourdes, il se pose donc le problème des molécules de grande taille, c'est-à-dire celles ayant une température d'ébullition supérieure ou égale à 350 °C, qui n'arrivent pas à pénétrer dans les très petits pores des zéolithes et sont ainsi exclues de la réaction de craquage. Pour améliorer le craquage de ces molécules lourdes, il est connu d'augmenter la teneur en « matrice active » des catalyseurs FCC, de favoriser la présence d'un réseau mésoporeux dans cette matrice et/ou d'ajuster l'acidité de celle-ci. En utilisant ainsi un matériau dont les pores présentent un diamètre de 20 à 500 Å, plus large que le diamètre des pores de la zéolithe MFI, on parvient à favoriser la diffusion des grosses molécules dans la matrice active où elles subissent un premier craquage qui s'accompagne de la formation de fragments plus petits.

Une façon connue de favoriser cette diffusion consiste à ajouter aux compositions catalytiques FCC connues à base de zéolithe Y et de zéolithe MFI, un composant particulier appelé additif de craquage de fond (abrégé BCA, de l'anglais « *Bottom Cracking Additive* »). Ces additifs de structure amorphe (parfois partiellement cristalline) sont composés de diluant, de liant, d'oxydes métalliques tels que l'alumine, la silice ou les aluminosilicates. Parfois, certains fournisseurs incorporent en outre dans ces additifs une zéolithe de type Y, échangée aux terres rares, ce qui leur confère une structure partiellement cristalline.

La demande internationale WO 97/ 12011 déposée par la société Intercat décrit ainsi un procédé de fabrication d'un catalyseur de craquage de fond et un procédé de craquage catalytique en lit fluidisé dans lequel le craquage des molécules à haut poids moléculaire s'effectue grâce à un catalyseur classique de FCC (contenant des zéolithes de type Y et de type MFI) auquel on a ajouté 1 à 15 % en poids d'un additif de craquage de fond de type aluminosilicate. Cet additif possède une surface spécifique comprise entre 150 et 175 m²/g et présente une teneur en silice comprise entre 0,5 et 50 % en poids. Le procédé décrit permet d'obtenir un bon rendement en essences et un rendement faible en fuels lourds et en coke. La concentration de l'additif de craquage de fond dans l'inventaire des catalyseurs d'une unité FCC excède rarement 15 % en poids.

Dans l'état de la technique, le rôle essentiel de la zéolithe Y pour orienter les procédés de craquage catalytique vers la production de GPL est donc largement connu, et les additifs de craquage de fond, servant principalement à améliorer le craquage des molécules lourdes, ne sont utilisés qu'en de faibles quantités, généralement inférieures à 15 %. La démarche logique de l'homme du métier souhaitant améliorer la production de GPL consisterait donc à augmenter le plus possible la concentration de la zéolithe Y dans le support catalytique et à utiliser simultanément un additif de craquage de fond. Le coût relativement élevé de la zéolithe Y s'oppose toutefois à une telle augmentation.

La Demanderesse, dans le cadre de ses recherches visant à mettre au point de nouvelles compositions catalytiques utilisées dans des procédés de craquage catalytique connus en lit mouvant ou en lit fluidisé circulant sur des coupes hydrocarbonées lourdes (i.e. distillant généralement à une température supérieure ou égale à 350 °C), a découvert de façon tout à fait inattendue qu'il était possible de maximiser la production de produits valorisables non pas en augmentant la concentration de zéolithe Y dans les compositions catalytiques FCC, mais au contraire, en se passant totalement de zéolithe Y en tant que catalyseur FCC et en augmentant considérablement la proportion de matériaux de type additif de craquage de fond. Ces derniers matériaux sont utilisés dans les compositions catalytiques utilisées selon la présente invention en tant que composant catalytique majoritaire et non plus comme simple additif ajouté en faible quantité (en général moins de 15 % en poids).

La Demanderesse a constaté que la combinaison de ces mesures permettait d'augmenter la production de gazoles de type LCO et de GPL, en particulier d'oléfines légères en C₃ et C₄, et d'améliorer la qualité des gazoles tout en conservant les conditions opératoires utilisées classiquement en FCC, c'est-à-dire généralement une température réactionnelle de 495 à 580 °C et un rapport débit catalyseur/débit huile (noté « ratio cat/oil ») de 3 à 10 exprimé par rapport au débit total de charge (coupes à température d'ébullition supérieure ou égale à 350 °C et recycles).

La présente invention a par conséquent pour objet un produit hydrocarboné obtenu par une procédé de craquage en lit mouvant ou fluidisé (FCC), d'au moins une charge hydrocarbonée ayant une température d'ébullition supérieure ou égale à 350°C, utilisant, en tant que seul catalyseur de craquage dans une zone réactionnelle de craquage, la composition catalytique constituée :
- de 50% à 99,5% en poids, rapportés à la somme de (1) et (2), d'au moins un composant catalytique amorphe (1) contenant au moins un oxyde métallique amorphe mésoporeux et/ou macroporeux choisi parmi la silice, l'alumine et les aluminosilicates, et
- de 0,5% à 50% en poids, rapportés à la somme de (1) et (2), d'au moins un composant catalytique cristallin (2) contenant au moins un aluminosilicate cristallin microporeux,
   et exempte de zéolithe Y.

On considère dans la présente invention, la composition catalytique en tant que « catalyseur frais » c'est-à-dire telle qu'elle est obtenue à l'issue de sa préparation.

Les adjectifs « mésoporeux » et « macroporeux » utilisés pour décrire le composant catalytique amorphe (1) désignent des matériaux ayant un diamètre moyen de pores compris respectivement de 20 à 500 Å (2 à 50 nm) et supérieur à 500 Å (50 nm).

L'adjectif « microporeux », décrivant le composant catalytique cristallin (2) désigne un matériau ayant un diamètre moyen de pores inférieur à 20 Å, de préférence inférieur à 7,5 Å (0,75 nm).

De manière préférée, la composition catalytique utilisée selon la présente invention est constituée de 50% à 95% en poids, rapportés à la somme de (1) et (2), d'au moins un composant catalytique amorphe (1) contenant au moins un oxyde métallique amorphe mésoporeux et/ou macroporeux choisi parmi la silice, l'alumine et les aluminosilicates, et de 5 % à 50 % en poids, rapportés à la somme de (1) et (2), d'au moins un composant catalytique cristallin (2) contenant au moins un aluminosilicate cristallin microporeux, et elle est exempte de zéolithe Y.

Dans un premier mode de réalisation, les composants catalytiques (1) et (2) sont présents dans la composition catalytique de la présente invention, en mélange que l'on peut qualifier d'intime. La composition catalytique comporte alors, et de préférence consiste en, au moins une matière particulaire. Dans ce cas, chaque particule de ladite matière particulaire, dite particule composite, comprend, du composant catalytique (1) et du composant catalytique (2), dans une proportion variable ou semblable d'une particule à une autre particule. Le plus souvent, dans ce cas, le composant catalytique cristallin (2) est incorporé dans une matrice formée par le composant catalytique amorphe (1) lors de la fabrication de ce dernier.

Dans un second mode de réalisation, les composants catalytiques (1) et (2) sont présents dans la composition catalytique, en mélange que l'on peut qualifier de physique. La composition catalytique comprend alors au moins une matière particulaire comprenant, de préférence consistant en, deux types différents de particules. En effet, la matière particulaire comporte des particules contenant, de préférence consistant en, le composant cristallin microporeux (2) et des particules contenant, de préférence consistant en, le composant amorphe (1).

Bien entendu, rien ne s'oppose à ce qu'une composition catalytique utilisée selon l'invention contienne les deux matières particulaires des deux modes de réalisation précédents, c'est-à-dire des trois particules à la fois, à savoir des particules composites contenant (1) et (2), des particules contenant (1) et des particules contenant (2).

Les composants (1) et (2) formant la composition catalytique utilisée selon l'invention contiennent généralement, outre au moins un oxyde métallique amorphe mésoporeux et/ou macroporeux et au moins un aluminosilicate cristallin microporeux, au moins un diluant et/ou liant, connu de l'homme du métier de la catalyse, n'ayant sensiblement aucune activité catalytique en FCC et utilisés communément dans les compositions catalytiques de craquage. Un diluant et/ou liant est par exemple du kaolin ou de la pseudo-boehmite.

La teneur du composant catalytique amorphe (1) en oxyde métallique amorphe mésoporeux et/ou macroporeux est par conséquent généralement inférieure à 100 % et en particulier de 5 % à 75 % en poids, le complément étant formé par au moins un liant et/ou diluant n'ayant sensiblement aucune activité catalytique. Lorsque ledit métal est l'aluminium, la teneur du composant catalytique amorphe (1) en oxyde d'aluminium est généralement de 10 % à 90 % en poids, et lorsque ledit métal est le silicium, la teneur du composant catalytique amorphe (1) en oxyde de silicium est généralement de 0 % (exclu) à 30 % en poids. De préférence, l'oxyde métallique amorphe du composant catalytique (1) contient de 10 % en poids à 90 % en poids d'oxyde d'aluminium, et contient de 0 % en poids à 30 % en poids d'oxyde de silicium.

Dans un mode de réalisation particulier de la composition utilisée selon l'invention, l'oxyde amorphe mésoporeux/macroporeux contient en outre un ou plusieurs éléments métalliques M, choisis de préférence parmi le magnésium, le calcium, le zinc, le bore, le titane, le zirconium et le phosphore. L'oxyde métallique amorphe du composant catalytique (1) présente de préférence une surface spécifique (mesurée selon la méthode BET - pour Brunauer Emmet et Teller -) de 50 à 700 m²/g et, en général, 75 % de ses pores ont un diamètre supérieur à 2 nm.

On peut citer à titre d'exemples de matériaux utilisables en tant que composant catalytique amorphe (1) le produit « BCA » commercialisé par la société Intercat, le « BCMT 100 » de la société Albermarl et le produit « Converter » commercialisé par la société Engelhard.

Selon l'invention, le composant catalytique cristallin (2) contient généralement moins de 100 %, et de préférence de 5 % à 75 % en poids d'au moins un aluminosilicate cristallin microporeux, le complément étant formé par au moins un liant et/ou diluant n'ayant sensiblement aucune activité catalytique.

L'aluminosilicate cristallin microporeux est de préférence une zéolithe présentant généralement au moins une ouverture à dix ponts à oxygène. Cela la distingue de la zéolithe Y dont l'ouverture est à 12 ponts à oxygène. L'aluminosilicate cristallin microporeux est de préférence une zéolithe présentant généralement un rapport Si/Al supérieur à 10. Cela la distingue de la zéolithe Y dont le rapport Si/Al est compris entre 2,5 et 10. De façon plus préférée, l'aluminosilicate cristallin microporeux est de préférence une zéolithe présentant au moins une ouverture à dix ponts à oxygène et ayant un rapport Si/Al supérieur à 10. Cela la distingue de la zéolithe Y dont l'ouverture est à 12 ponts à oxygène et dont le rapport Si/Al est compris entre 2,5 et 10.

Dans un mode de réalisation préféré, l'aluminosilicate cristallin microporeux est de préférence choisi dans le groupe formé par les ZSM-5, modifiée ou non au phosphore, ZSM-11, ZSM-22, ZSM-23, ZSM-35, ZSM-48, ZSM-50, TS-1, TS-2, SSZ-46, MCM-22, MCM-49, FU-9, PSH-3, ITQ-1, EU-1, NU-10, la silicalite-1, la silicalite-2, la boralite C, la boralite D, la ferriérite, la chabasite et theta-1, et leurs mélanges.

Parmi celles-ci, la zéolithe ZSM-5, modifiée ou non au phosphore, est particulièrement préférée, et une zéolithe ZSM-5 modifiée au phosphore est encore plus préférée.

Les diamètres des pores des composants formant la composition catalytique sont optimisés afin de favoriser la diffusion et le craquage des grosses molécules hydrocarbonées. Ainsi les grosses molécules, qui sont les plus difficiles à craquer, subissent généralement dans un premier temps l'action du composant catalytique mésoporeux et/ou macroporeux (1), et deviennent ainsi aptes à diffuser dans le réseau cristallin du composant catalytique (2) contenant la zéolithe microporeuse pour y subir un craquage complémentaire.

Dans le cas où les composants catalytiques (1) et (2) sont mis en présence séparément sous forme de deux types différents de particules (mélange physique), ils peuvent être injectés dans l'unité de FCC soit ensemble, soit de manière séparée. Dans le premier cas, l'injection est généralement celle d'un pré-mélange en proportions déterminées des deux composants au moyen d'une trémie unique de chargement. Dans le second cas, il y a généralement injection distincte de chacun des deux types de particules au moyen de deux trémies de chargement différentes. Ce dernier cas présente l'avantage d'offrir une grande flexibilité dans le choix des rapports entre les deux composants à injecter et permet ainsi d'orienter les rendements des produits en fonction de l'intérêt économique.

Le procédé utilisé selon l'invention permet de produire davantage de GPL contenant en outre plus d'oléfines en C₃ et C₄. Ainsi la teneur en propylène dans la fraction totale de C₃ est généralement d'au moins 90 % en poids, et la teneur en butènes dans la fraction totale de C₄ est généralement d'au moins 80 % en poids. D'autre part, généralement, la teneur en isobutènes dans la fraction butènes est généralement au moins égale à 35 % en poids, en particulier de 35 à 40 % en poids.

La Demanderesse a par ailleurs généralement constaté une augmentation de la production de LCO, cette fraction LCO présentant généralement en outre un indice de cétane amélioré, typiquement au moins égal à 23. La composition de la fraction aromatique du LCO est généralement atypique puisqu'on note une fraction de composés monoaromatiques généralement supérieure à la fraction de composés polyaromatiques. Le rapport pondéral des composés monoaromatiques aux composés polyaromatiques (HAP) est donc généralement supérieur à 1 et le plus souvent compris de 1 à 2,5. La valeur relativement élevée de ce rapport facilite la valorisation de la fraction LCO en tant que base pour gazole moteur.

Par ailleurs, la répartition généralement atypique en composés mono et polyaromatiques associée à la densité plus faible (moins 5 % environ) et à la teneur plus importante en hydrogène de la fraction LCO obtenue par le procédé utilisé selon l'invention permet un hydrotraitement moins sévère de cette fraction LCO nécessitant en particulier moins d'hydrogène.

Le procédé utilisé selon l'invention produit une fraction essence ayant généralement une température d'ébullition généralement de 15 à 221°C. Cette fraction essence se distingue de celles obtenues par des procédés FCC connus par le fait qu'elle contient le plus souvent moins de composés aromatiques que de composés oléfiniques. La teneur en composés aromatiques dans les essences obtenues par le procédé utilisé selon l'invention est en particulier inférieure à 20 % en volume et la teneur en composés oléfiniques est généralement supérieure à 50 % en volume, de préférence supérieure à 70 % en volume.

Associé à la nature de la composition catalytique utilisée dans le procédé utilisé selon l'invention, le recyclage de certains produits issus du craquage vers la zone réactionnelle (d'où le terme de "recycle") permet en général d'améliorer encore le rendement en oléfines légères.

En particulier, il est envisageable de récupérer une partie de l'essence produite pour la traiter de nouveau et la convertir en essence plus légère et en GPL. De même, il est envisageable de valoriser une partie du slurry produit en le convertissant en fractions plus légères par réinjection dans la zone réactionnelle. Par suite, le procédé utilisé selon l'invention comprend de préférence la réinjection d'au moins une coupe de produit(s) issu(s) du craquage dans la zone réactionnelle de craquage, de préférence une coupe essence ou une coupe slurry.

Ainsi, le recyclage de tout ou partie de l'essence et du slurry vers la zone réactionnelle du FCC permet d'accentuer encore davantage l'atypisme des rendements obtenus par le procédé utilisé selon l'invention. Les deux coupes sont réinjectées ensemble ou bien séparément à des niveaux différents dans la zone réactionnelle.

La réinjection de ces flux peut être réalisée soit au même niveau que l'injection de la charge principale de l'unité FCC, soit en amont de l'injection de la charge principale, soit en aval de l'injection de la charge principale.

Par injecteur de charge, nous entendons généralement les injecteurs par lesquels sont injectées les charges lourdes dont le point d'ébullition est supérieur à 350 °C.

Le procédé utilisé selon l'invention peut être appliqué au traitement des coupes de distillation atmosphérique, des coupes de distillation sous vide, des résidus de distillation atmosphérique (RAT), des hydrocarbures paraffiniques issus de procédés d'hydrocraquage catalytique et des hydrocarbures issus des procédés Fischer-Tropsch, et de leurs mélanges. L'invention concerne ainsi le produit hydrocarboné obtenu par le procédé utilisé selon l'invention tel que décrit précédemment.

### EXEMPLES

Les exemples qui suivent servent à illustrer l'invention sans pour autant en limiter la portée. Dans ces exemples les % sont donnés en % en poids sauf mention contraire.

On a réalisé sur une installation pilote ARCO des tests de craquage catalytique en lit fluidisé d'une charge VGO (« vacuum *gasoil* ») en utilisant, soit une composition catalytique utilisée selon l'état de la technique, soit une composition catalytique utilisée selon l'invention.

### Exemple comparatif 1

Une composition catalytique, contenant 90% du catalyseur Kristal 212 (zéolithe Y) et 10% de booster commercial, connu dans le commerce sous l'appellation Olefin Max de Grace Davison et contenant 25% de cristaux ZSM-5, a été utilisée pour craquer une charge hydrotraitée type VGO.

### Exemple comparatif 2

Un catalyseur de craquage de fond (BCA) de la société Intercat, connu dans le commerce sous l'appellation BCA105, a été utilisé pour craquer une charge hydrotraitée type VGO.

### Exemple 3 selon l'invention

Une composition catalytique, contenant 90% de BCA105 et 10% de Olefin Max, a été utilisée pour craquer une charge hydrotraitée type VGO.

### Exemple comparatif 4

Une composition catalytique, contenant 90% du catalyseur Kristal 212, et 10% de booster Olefin Max, a été utilisée pour craquer une charge hydrotraitée contenant 60% de VGO et 40% de résidu atmosphérique.

### Exemple comparatif 5

Un catalyseur de craquage de fond BCA105 a été utilisé pour craquer une charge hydrotraitée contenant 60% de VGO et 40% de résidu atmosphérique.

### Exemple 6 selon l'invention

Une composition catalytique contenant 90% de BCA105 et 10% de Olefin Max a été utilisée pour craquer une charge une charge hydrotraitée contenant 60% de VGO et 40% de résidu atmosphérique.

Les caractéristiques des charges sont données dans le **tableau 1**.

Les conditions opératoires et les rendements sont donnés dans le **tableau 2** pour la charge hydrotraitée type VGO et dans le **tableau 3** pour la charge contenant 40% de résidu atmosphérique. Le BCA105 et le Olefin Max ont préalablement été traités à la vapeur d'eau à 800°C pendant 5 heures.

### Exemple 7 selon l'invention

Un test de craquage a été effectué dans une unité pilote ACE. Le catalyseur est constitué de 90% du BCA et 10% de Olefin-max.

Les conditions de test ont été les suivantes :
- C/O constant à 5,5
- masse de catalyseur = 9 g
- temps d'injection de charge = 82 s
- débit d'injection de charge = 1,5 mL/min
- position injecteur = 2,125" (temps de craquage=1,5 s)
- température de préchauffe charge=100°C

La charge utilisée a été la F742, décrite dans le **tableau 1. Le tableau 4** montre les résultats qui ont été obtenus.

### Exemples 8 et 9 selon l'invention

Un catalyseur a été préparé selon la méthode décrite par le schéma de la figure jointe. La préparation comprend le mode opératoire tel que schématisé ci-dessous.

A est le catalyseur de départ à base de ZSM-5, il subit des traitements successifs B puis C puis D, ce qui permet d'obtenir un catalyseur E à base de zéolithe modifiée.
A :
   ZSM-5 (Tricat)
   Si/Al =11,66
   Na₂O = 136 ppm
B : Traitement à la vapeur à 550°C, 100 vol % vapeur pendant 48 heures
C : H3PO4 traitement à température d'ébullition pendant 18 heures : 10 mol PO₄³⁻/MOl Al, 4.2 L solution aqueuse/kg zéolithe.
D : Filtration pour enlever l'aluminium dissous et l'excès de H₃PO₄.
E:
   Si/A1 = 27
   Na₂O = 46 ppm
   P = 5,6 % poids

Deux types de traitement ont alors eu lieu, permettant d'obtenir une zéolithe ZMS-5 finale avec plus ou moins de Phosphore. Les deux zéolithes ainsi obtenues sont des zéolithes ZSM-5 modifiées au phosphore utilisées selon l'invention. Le premier type de traitement comprend la réalisation des étapes successives F (qui permet d'obtenir un catalyseur à base de zéolithe modifiée G), puis H, J et L pour obtenir une zéolithe ZSM-5 contenant beaucoup de phosphore (M).
F: lavage avec de l'eau désionisée
   6 fois 2 L d'eau par 1 kg de zéolithe
G :
   Si/Al = 29,5
   Na₂O = 108 ppm
   P = 0,174 % en poids
H : Mélanger avec le liant :
   500 g de zéolithe G + 2 L de 1 % HNO₃ + 250 g de kaolin + 250 g de pseudo-boehmite.
J : Atomisation (atomiseur de Marque NIRO)
L : Calcination à 600 °C pendant 10 heures.
M : Catalyseur final lavé (ZSM-5 partiellement dopée au phosphore, avec lipide phosphoré).

Le second type de traitement comprend la réalisation des étapes successives I, K et N pour obtenir une zéolithe ZMS-5 contenant peu de Phosphore (O).
I : Mélanger avec le liant :
   500 g de zéolithe E + 2 L de 1 % HNO₃ + 250 g de kaolin + 250 g de pseudo-boehmite.
K : Atomisation (atomiseur de Marque NIRO)
N : Calcination à 600 °C pendant 10 heures.
O : Catalyseur final non-lavé (ZSM-5 partiellement dopée au phosphore comprenant un peu de phosphore)

Cette préparation (B à D, puis F, H, J et L, ou bien B à D puis I, K et N) a abouti à l'obtention d'un catalyseur contenant une zéolithe ZSM-5 désaluminée et partiellement dopée à l'oxyde de phosphore (M ou O), lesdits catalyseurs ayant été utilisés (10 %) en combinaison avec le catalyseur BCA (90%).

Les tests de craquage ont été effectués dans une unité pilote ACE.

Les conditions de test ont été les suivantes :
- C/0 constant à 5,5
- masse de catalyseur = 9g
- temps d'injection de charge = 82s
- débit d'injection de charge = 1,5 mL/mn
- position injecteur = 2,125" (temps de craquage=1,5 s)
- température de préchauffe charge = 100°C

La charge utilisée a été la F742, décrite dans le **tableau 1**. Le **tableau 4** montre les résultats qui ont été obtenus.

**TABLEAU 1**

| | VGO | 60% VGO + 40% RAT |
|---|---|---|
| Référence | F672 | F742 |
| Nombre AcideTotal (mg KOH/100 g) | 0,13 | 0,24 |
| Densité g/ml @ 15°C | 0,9058 | 0,9178 |
| Soufre % en poids @ rayons X | 0,142 | 0,3 |
| Azote de base ppm en poids | 167 | 479 |
| Azote Total ppm en poids | < 0.5 | |
| Carbone Conradson % en poids | 0,12 | 2,01 |
| Point Aniline °C | 91 | 92,6 |
| Viscosité Cinétique cSt @ 100°C | 8,13 | 12.36 |
| Ni ppm en poids | * | 4 |
| V ppm en poids | * | 4 |
| SOARA Saturés+oléfines (% mol) | 49,6 | 48,1 |
| SOARA Oléfines (% mol) | 0,3 | 0.3 |
| SOARA Aromatiques (% mol) | 47 | 44,4 |
| SOARA Mono aromatiques (% mol) | 30 | 22,8 |
| SOARA Di aromatiques (% mol) | | |
| Résines (% en poids) | 3,4 | 7,5 |
| Asphaltènes (% en poids) | 0,08 | 0,35 |
| | | |
| *D 1160 vol% T* | | |
| IBP | 274 | 252 |
| 5 | 354 | 349 |
| 10 | 377 | 377 |
| 20 | 404 | 408 |
| 30 | 422 | 428 |
| 40 | 438 | 448 |
| 50 | 454 | 469 |
| 60 | 471 | - 489 |
| 70 | 489 | 511 |
| 80 | 508 | 540 |
| 90 | 533 | 592 |
| 95 | 552 | 654 |
| FBP | 597 | 697 (97%) |
| | | |

**TABLEAU 2**

| | VOG (F672) | | | | | | | | |
|---|---|---|---|---|---|---|---|---|---|
| | Exemple comparatif 1 | | | Exemple comparatif 2 | | | Exemple selon l'invention 3 | | |
| Catalyseur | Kristal 212 10% OLEFIN MAX C | | | BCA 105 | | | BCA 105 + 10 % OLEFIN MAX C | | |
| **Test No.** | **K3422** | **K3423** | **K3424** | **K3410** | **K3411** | **K3412** | **K3413** | **K3414** | **K3415** |
| Trx°C | 530 | 530 | 530 | 530 | 530 | 530 | 530 | 530 | 530 |
| Cat/Oil | 4,61 | 5,65 | 6,61 | 4,61 | 5,59 | 6,66 | 4,67 | 5,65 | 6,64 |
| H2 | 0,29 | 0,27 | 0,27 | 0,33 | 0,33 | 0,33 | 0,30 | 0,29 | 0,30 |
| H2S | 0,04 | 0,04 | 0,04 | 0,02 | 0,02 | 0,02 | 0,03 | 0,02 | 0,02 |
| CH4 | 0, 56 | 0,60 | 0,63 | 0,77 | 0,76 | 0,77 | 0,69 | 0,66 | 0,69 |
| C2H4 | 0,69 | 0, 75 | 0,80 | 0,68 | 0,68 | 0, 70 | 0,83 | 0,79 | 0,85 |
| C2H6 | 0,34 | 0,36 | 0,38 | 0,57 | 0,55 | 0,53 | 0,47 | 0,44 | 0,46 |
| **C3H6 (C3= totaux)** | **7,89** | **8,30** | **8,71** | **4,83** | **5,30** | **5,74** | **8,49** | **8,41** | **9,01** |
| C3H8 | 1,00 | 1,11 | 1,20 | 0,53 | 0,56 | 0,57 | 0,69 | 0,67 | 0,71 |
| **C3 totaux** | **8,89** | **9,41** | **9,91** | **5,36** | **5,86** | **6,31** | **9,18** | **9,08** | **9,72** |
| C4H6 (C4 == donc C4 =) | 0,04 | 0,04 | 0,03 | 0,10 | 0,09 | 0,09 | 0,10 | 0,08 | 0,08 |
| 1C4H8 (C4 =) | 1,91 | 1,99 | 1,99 | 1,49 | 1,59 | 1,70 | 1,92 | 1,94 | 2,05 |
| i C4H8 (iC4 = donc C4 =) | 2,67 | 2, 71 | 2,67 | 2,81 | 2,98 | 3,17 | 3,85 | 3,88 | 4,07 |
| 2 (ct) C4H8 (C4 =) | 4,04 | 4,25 | 4,25 | 3,09 | 3,34 | 3,56 | 4,05 | 4,15 | 4, 36 |
| nC4H10 | 0,72 | 0,80 | 0,84 | 0,31 | 0,33 | 0, 35 | 0,37 | 0,37 | 0,38 |
| iC4H10 | 3,84 | 4,23 | 4,48 | 1,24 | 1,39 | 1,49 | 1,47 | 1,54 | 1,63 |
| **C4 = totaux** | **8,66** | **8,99** | **8,94** | **7,49** | **8,00** | **8,52** | **9,92** | **10,05** | **10,56** |
| **C4 totaux** | 13,22 | 14,02 | 14,26 | 9,04 | 9,72 | 10,36 | 11,76 | 11,96 | 12,57 |
| **Essence Totale** | **47,39** | **47,04** | **46,93** | **34,71** | **38,41** | **40,16** | **32,48** | **34,91** | **34,56** |
| FIA saturés (%vol) | 30,90 | 29,50 | 34,10 | 22,8 | 25,3 | 23,6 | 24,6 | 23,9 | 25.6 |
| FIA oléfines (%vol) | 34,50 | 32,80 | 32,70 | 62,4 | 60,2 | 61,1 | 62,1 | 62,1 | 60,3 |
| FIA aromatiques (%vol) | 34,60 | 37,70 | 33,20 | 14,8 | 14,5 | 15,3 | 13,3 | 14 | 14,1 |
| **LCO total** | **16,21** | **15,45** | **14,60** | **20,99** | **21,11** | **20,19** | **20,45** | **20,08** | **19,76** |
| Densité (g/ml) | 0,97 | 0,97 | 0,98 | 0, 93 | 0,93 | 0,94 | 0,93 | 0,93 | 0,94 |
| S (ppm) | 1990 | 2040 | 2110 | 1500 | 1860 | 1780 | 1550 | 1590 | 1680 |
| Fischer Monoaromatique (%pd) | | 14,60 | | | 23,90 | | | 27,70 | |
| Fischer Diaromatique (%pd) | | 53,80 | | | 40,70 | | | 43,00 | |
| Fischer Triaromatique (%pd) | | 8,90 | | | 7,10 | | | 4,40 | |
| **Fischer Monoaromatique/ Fischer Di et Triaromatique (%)** | | 0,23 | | | 0,50 | | | 0,58 | |
| **Slurry total** | **10,3** | **9,8** | **9,4** | **26,0** | **20,8** | **18,6** | **22,2** | **20,0** | **19,1** |
| Densité (g/ml) | 1,05 | 1,06 | 1,07 | 0,95 | 0,95 | 0,95 | 0,95 | 0,95 | 0,95 |
| S (ppm) | 4210 | 4230 | 4350 | 24,90 | 25,00 | 2760 | 2570 | 2660 | 2780 |
| COKE | 2,34 | 2,52 | 2,94 | 1,89 | 2,12 | 2,39 | 1,95 | 2,10 | 2,29 |
| Gaz sec | 1,92 | 2,02 | 2,12 | 2,38 | 2,35 | 2,35 | 2,32 | 2,20 | 2,32 |
| Conversion standard | 73,23 | 74,57 | 75,90 | 52,75 | 57,83 | 60,93 | 57,13 | 59,69 | 60,91 |
| Conversion liquide | 85,13 | 85,44 | 85,43 | 69,39 | 74,40 | 76, 30 | 73,24 | 75,39 | 75,99 |
| **C3= / C3 totaux** | **0,89** | **0,88** | **0,88** | **0,90** | **0,90** | **0,91** | **0,92** | **0,93** | **0,93** |
| **C4= / C4 totaux** | **0,66** | **0,64** | **0,63** | **0,83** | **0,82** | **0,82** | **0,84** | **0,84** | **0,84** |
| iC4= / C4 totaux | 0,20 | 0,19 | 0,19 | 0,31 | 0,31 | 0,31 | 0,33 | 0,32 | 0, 32 |

**TABLEAU 3**

| | 60% VGO (F672) + 40 % RAT (F729) (F742) | | | | | | | | |
|---|---|---|---|---|---|---|---|---|---|
| | Exemple comparatif 4 | | | Exemple comparatif 5 | | | Exemple selon l'invention 6 | | |
| Catalyseur | Kristal 212 + 10% OLEFIN MAX C | | | BCA 105 | | | BCA 105 + 10 % OLEFIN MAX C | | |
| **Test** | **K3419** | **K3420** | **K3421** | **K3407** | **K3408** | **K3409** | **K3416** | **K3417** | **K3418** |
| Trx °C | 530 | 530 | 530 | 530 | 530 | 530 | 530 | 530 | 530 |
| Cat/Oil | 4,42 | 5,42 | 6.47 | 4,53 | 5,41 | 6,46 | 4,44 | 5,46 | 6,43 |
| H2 | 0,25 | 0,26 | 0,30 | 0,37 | 0,38 | 0,37 | 0,33 | 0,34 | 0,35 |
| H2S | 0,12 | 0,12 | 0,12 | 0,09 | 0,08 | 0,08 | 0,10 | 0,10 | 0,09 |
| CH4 | 0,61 | 0,65 | 0,69 | 0,92 | 0,89 | 0,87 | 0,91 | 0,83 | 0,85 |
| C2H4 | 0,65 | 0,69 | 0,73 | 0,72 | 0,70 | 0,68 | 0,83 | 0,78 | 0,82 |
| C2H6 | 0,38 | 0,40 | 0,41 | 0,73 | 0,68 | 0,63 | 0,66 | 0,59 | 0,58 |
| **C3H6 (C3 = totaux)** | **7,42** | **7,63** | **7,74** | **3,83** | **4,43** | **4,78** | **5,14** | **7,03** | **7,46** |
| C3H8 | 0.86 | 0,88 | 0,99 | 0,58 | 0,59 | 0,59 | 0,73 | 0,68 | 0.69 |
| **C3 totaux** | **8,28** | **8,51** | **8,73** | **4,41** | **5,02** | **5,37** | **5,87** | **7,71** | **8,15** |
| C4H6 (C4 == donc C4=) | 0,06 | 0,05 | 0,05 | 0,10 | 0,10 | 0,09 | 0,10 | 0,09 | 0,08 |
| 1C4H8 (C4 =) | 1,79 | 1,84 | 1,85 | 1,17 | 1,30 | 1,37 | 1,72 | 1,66 | 1,73 |
| iC4H8 (iC4 = donc C4 =) | 2,90 | 2,98 | 2,79 | 2,20 | 2,47 | 2,62 | 3,49 | 3,37 | 3,49 |
| 2 (ct)C4H8 (C4 =) | 3,82 | 4,02 | 3,94 | 2,39 | 2,68 | 2,86 | 3,58 | 3,51 | 3,64 |
| nC4H10 | 0,57 | 0,60 | 0,67 | 0,29 | 0,30 | 0,31 | 0,36 | 0,34 | 0,34 |
| iC4H10 | 2,75 | 2,92 | 3,22 | 0,82 | 0,94 | 1,04 | 1,01 | 0,99 | 1,04 |
| **C4 = totaux** | **8,57** | **8,89** | **8,63** | **5,86** | **6,55** | **6,94** | **8,89** | **8,63** | **8,94** |
| **C4 totaux** | **11,89** | **12,41** | **12,52** | **6,97** | **7,79** | **8,29** | **10,26** | **9,96** | **10,32** |
| **Essence totale** | **40,35** | **41,44** | **43,85** | **34,54** | **36,76** | **38,17** | **30,11** | **31,41** | **32,17** |
| FIA saturés (%vol) | 28,60 | 30,10 | 31,80 | 21,9 | 21,9 | 24,1 | 25,9 | 28,3 | 24,9 |
| **FIA oléfines (%vol)** | **42,90** | **42,50** | **38,70** | **66** | **67,3** | **64** | **64,3** | **62** | **60,1** |
| FIA aromatiques (%vol) | 28,00 | 27,40 | 20,50 | 12,1 | 10,8 | 11,9 | 9,80 | 9,70 | 15,00 |
| **LCO total** | **19,93** | **18,85** | **15,97** | **20,51** | **20,23** | **20,07** | **20,33** | **20,09** | **20,70** |
| Densité (g/ml) | 0,95 | 0,95 | 0,96 | 0,92 | 0,92 | 0,92 | 0,92 | 0,93 | 0,93 |
| S (ppm) | 3400 | 3380 | 3450 | 2210 | 2387 | 2418 | 2660 | 2730 | 2870 |
| Cétane calculé | | 17,80 | | | 23,60 | | | 23,40 | |
| Fischer Monoaromat (% pd) | | 17,60 | | | 27, 70 | | | 27, 00 | |
| Fischer Diaromat (% pd) | | 53,20 | | | 36,20 | | | 38,70 | |
| Fischer Triaromat (% pd) | | 7,20 | | | 4,90 | | | 4,90 | |
| **Fischer Monoaromatiques / Fischer Di+Triaromatiques (%)** | | **0,29** | | | **0,67** | | | **0,62** | |
| **Slurry total** | **13,60** | **12,46** | **12,01** | **26,75** | **23,21** | **21,21** | **26,52** | **24,02** | **21,36** |
| Densité (g/ml) | 1,02 | 1,03 | 1,05 | 0,94 | 0,95 | 0,96 | 0,94 | 0,94 | 0,95 |
| S (ppm) | 5470 | 5690 | 5980 | 2906 | 3104 | 3321 | 3180 | 3320 | 3490 |
| COKE | 3,95 | 4,22 | 4,66 | 4,00 | 4,27 | 4,26 | 4,00 | 4,18 | 4,63 |
| Gaz sec | 2,00 | 2,12 | 2,25 | 2,82 | 2,72 | 2,64 | 2,81 | 2,63 | 2,69 |
| Conversion standard | 66,06 | 68,33 | 71,76 | 52,28 | 56,12 | 58,28 | 52,72 | 55,47 | 57,53 |
| Conversion liquide | 80,04 | 80,83 | 80,82 | 65,97 | 69,35 | 71,46 | 66,15 | 68,75 | 70,91 |
| **C3= / C3 totaux** | **0,90** | **0,90** | **0,89** | **0,87** | **0,88** | **0,89** | **0,88** | **0,91** | **0,92** |
| **C4= / C4 totaux** | **0,72** | **0,72** | **0,69** | **0,84** | **0,84** | **0,84** | **0,87** | **0,87** | **0,87** |
| **iC4 = / C4 totaux** | **0,23** | **0,24** | **0,22** | **0,32** | **0,32** | **0,32** | **0,34** | **0,34** | **0,34** |

**TABLEAU 4**

| | Exemple 7 Selon l'invention | Exemple 8 selon l'invention | Exemple 9 selon l'invention |
|---|---|---|---|
| | BCA+Olefinmax | BCA+haut P ZSM-5 M | BCA+bas P ZSM-5 O |
| Réaction T [°C] | 525 | 525 | 525 |
| H2 | 0.27 | 0.32 | 0.29 |
| H2S | 0.87 | 0.87 | 0.87 |
| C1 | 0.62 | 0.63 | 0.64 |
| C2 | 0.41 | 0.43 | 0.44 |
| C2= | 0.56 | 0.91 | 0.90 |
| H2-C2 | 2.72 | 3.16 | 3.15 |
| C3 | 0.58 | 0.75 | 0.74 |
| **C3=** | **5.19** | **7.77** | **7.34** |
| nC4 | 0.27 | 0.38 | 0.37 |
| iC4 | 0.98 | 0.97 | 0.95 |
| **C4= totaux** | **5.71** | **8.78** | **8.28** |
| iC4= | 1.00 | 1.35 | 1.31 |
| nC4= | 2.35 | 3.34 | 3.15 |
| cis C4= | 0.96 | 1.64 | 1:54 |
| trans C4= | 1.39 | 2.45 | 2.28 |
| C3 totaux | 5.77 | 8.52 | 8.08 |
| C4 totaux | 6.95 | 10.14 | 9.59 |
| **GLP (Total C4 + C3)** | **12.72** | **18.65** | **17.67** |
| Gasoline C5-221 | 26.69 | 23.03 | 22.98 |
| LCO 221-360 | 20.58 | 18.44 | 18.22 |
| Bottoms 360+ | 31.84 | 30.23 | 31.58 |
| Coke | 5.45 | 6.49 | 6.41 |
| Delta Coke | 0.99 | 1.18 | 1.16 |
| Conversion -221 | 47.58 | 51.34 | 50.20 |
| Liq. Conversion | 59.99 | 60.12 | 58.87 |
| Cat/Oil | 5.50 | 5.50 | 5.50 |
| **C3=/C3's** | **0.90** | **0.91** | **0.91** |
| **C4=/C4's** | **0.82** | **0.87** | **0.86** |
| LCO / Slurry | 0.65 | 0.61 | 0.58 |
| 100-slurry/slurry | 2.14 | 2.31 | 2.17 |

On a ainsi constaté que l'utilisation de la composition catalytique utilisée selon l'invention a permis d'augmenter significativement à la fois le rendement en propylène, en butènes (surtout en isobutène) et en monoaromatiques par rapport aux polyaromatiques dans le LCO, tout en améliorant les propriétés de ces différentes fractions, c'est-à-dire la teneur en oléfines de la coupe C3 et de la coupe C4, la teneur en aromatiques dans la coupe essence et la teneur en poly-aromatiques. D'autre part, les catalyseurs utilisés contenant du phosphore donnent avantageusement un rendement en propylène plus élevé et une pureté de la coupe C3 et C4 plus riche en oléfines par rapport à un catalyseur utilisé selon l'invention sans phosphore.

## Revendications

1. Composition catalytique pour le craquage catalytique en lit mouvant ou fluidisé (FCC), **caractérisée en ce qu'**elle est constituée :
- de 50% à 99,5% en poids, rapportés à la somme de (1) et (2), d'au moins un composant catalytique amorphe (1) contenant au moins un oxyde métallique amorphe mésoporeux et/ou macroporeux choisi parmi la silice, l'alumine et les aluminosilicates, et
- de 0,5% à 50% en poids, rapportés à la somme de (1) et (2), d'au moins un composant catalytique cristallin (2) contenant au moins un aluminosilicate cristallin microporeux,
et qu'elle est exempte de zéolithe Y.

2. Composition catalytique selon la revendication 1, telle qu'elle est constituée :
- de 50% à 95% en poids, rapportés à la somme de (1) et (2), d'au moins un composant catalytique amorphe (1) contenant au moins un oxyde métallique amorphe mésoporeux et/ou macroporeux choisi parmi la silice, l'alumine et les aluminosilicates, et
- de 5% à 50% en poids, rapportés à la somme de (1) et (2), d'au moins un composant catalytique cristallin (2) contenant au moins un aluminosilicate cristallin microporeux,
et qu'elle est exempte de zéolithe Y.

3. Composition catalytique selon l'une des revendications 1 ou 2, telle qu'elle comporte au moins une matière particulaire comprenant des particules contenant chacune du composant catalytique (1) et du composant catalytique (2).

4. Composition catalytique selon la revendication 1 à 3, telle qu'elle comporte au moins une matière particulaire comprenant des particules contenant du composant catalytique (1) et des particules contenant du composant catalytique (2).

5. Composition catalytique selon l'une des revendications précédentes, telle que le composant catalytique (1) contient de 5 % à 75 % en poids d'oxyde métallique amorphe mésoporeux et/ou macroporeux choisi parmi la silice, l'alumine et les aluminosilicates, le complément étant formé par au moins un liant et/ou diluant n'ayant sensiblement aucune activité catalytique.

6. Composition catalytique selon l'une des revendications précédentes, telle que l'oxyde métallique amorphe du composant catalytique (1) contient de 10 % en poids à 90 % en poids d'oxyde d'aluminium, et contient de 0 % en poids à 30 % en poids d'oxyde de silicium.

7. Composition catalytique selon l'une des revendications précédentes, telle que l'oxyde métallique amorphe du composant catalytique (1) contient en outre un ou plusieurs éléments métalliques M choisis parmi le magnésium, le calcium, le zinc, le bore, le titane, le zirconium et le phosphore.

8. Composition catalytique selon l'une des revendications précédentes, telle que l'oxyde métallique amorphe du composant catalytique (1) présente une surface spécifique de 50 à 700 m²/g.

9. Composition catalytique selon l'une des revendications précédentes, telle que l'oxyde métallique amorphe du composant catalytique (1) est tel que 75 % de ses pores ont un diamètre supérieur à 2 nm.

10. Composition catalytique selon l'une des revendications précédentes, telle que le composant catalytique (2) contient de 5 % à 75 % en poids d'au moins un aluminosilicate cristallin microporeux, le complément étant formé par au moins un liant et/ou diluant n'ayant sensiblement aucune activité catalytique.

11. Composition catalytique selon l'une des revendications précédentes, telle que l'aluminosilicate cristallin microporeux du composant catalytique (2) est une zéolithe qui présente un rapport Si/Al supérieur à 10.

12. Composition catalytique selon l'une des revendications précédentes, telle que l'aluminosilicate cristallin microporeux du composant catalytique (2) est une zéolithe qui présente au moins une ouverture à dix ponts à oxygène.

13. Composition catalytique selon l'une des revendications précédentes, telle que l'aluminosilicate cristallin microporeux du composant catalytique (2) est choisi dans le groupe formé par les ZSM-5, modifiée ou non au phosphore, ZSM-11, ZSM-22, ZSM-23, ZSM-35, ZSM-48, ZSM-50, TS-1, TS-2, SSZ-46, MCM-22, MCM-49, FU-9, PSH-3, ITQ-1, EU-1, NU-10, la silicalite-1, la silicalite-2, la boralite C, la boralite D, la ferriérite, la chabasite et la theta-1, et leurs mélanges, l'aluminosilicate cristallin microporeux étant de façon préférée une ZSM-5, modifiée ou non au phosphore, et de façon encore plus préférée une ZSM-5 modifiée au phosphore.

14. Procédé de craquage catalytique en lit mouvant ou fluidisé circulant, d'au moins une charge hydrocarbonée ayant une température d'ébullition supérieure ou égale à 350°C, utilisant, en tant que seul catalyseur de craquage dans une zone réactionnelle de craquage, la composition catalytique selon l'une des revendications précédentes.

15. Procédé selon la revendication précédente comprenant la réinjection d'au moins une coupe de produit(s) issu(s) du craquage dans la zone réactionnelle de craquage, de préférence une coupe essence ou une coupe slurry.

16. Procédé selon l'une des revendications 14 ou 15, tel que la charge hydrocarbonée ayant température d'ébullition supérieure ou égale à 350°C est choisie parmi les coupes de distillation atmosphérique, les coupes de distillation sous vide, les résidus de distillation atmosphérique (RAT), les hydrocarbures paraffiniques issus de procédés d'hydrocraquage catalytique et les hydrocarbures issus des procédés Fischer-Tropsch, et leurs mélanges.
